# EUROPEAN PATENT APPLICATION

(11) **EP 4 779 848 A1**
(43) Date of publication of application: **22.07.2026**
(21) Application number: 25152748.7
(22) Date of filing: 20.01.2025
(51) Int. Cl.: H02K 11/00, H02K 41/03

(54) **PLANAR MOTOR SYSTEM**

(71) Applicant: ABB SCHWEIZ AG, 5400 Baden (CH)
(72) Inventor: Reinthaler, Michael, 5223 Pfaffstätt (AT); Vogel, Philipp, 9542 Münchwilen (CH); Blume, Sebastian, 8712 Stäfa (CH)
(74) Representative: Weiss Patentanwalts GmbH

(57) **Abstract**

The present invention relates to a planar motor system (1), which comprises at least one stator segment (2) and at least one shuttle (3) with a magnet unit (6), wherein drive coils (5) are arranged on the at least one stator segment (2, 21) and a magnet unit (6) is arranged on the at least one shuttle (3). A control arrangement (7) controls the drive coils (5) of the at least one stator segment (2) to interact with the magnet unit (6) of the at least one shuttle (3) electromagnetically to move the at least one shuttle (3). To provide an improved, simple and cost-efficient energy and/or data transfer between the shuttle (3) and/or a further stator segment (22), the planar motor system (1) comprises a capacitive power transfer arrangement (10). The capacitive power transfer arrangement (10) comprises at least two first plate electrodes (8) provided on the at least one stator segment (2, 21) of the planar motor system (1) and at least two second plate electrodes (9) provided on the at least one shuttle (3) and/or on another stator segment (22) of the planar motor system (1). The control arrangement (7) is configured to move the at least one shuttle (3) and/or the other stator segment (22) of the planar motor system (1) such that one (81) of the first plate electrodes (8) provided on the at least one stator segment (2, 21) of the planar motor system (1) and one (91) of the second plate electrodes (9) provided on the at least one shuttle (3) and/or on the other stator segment (22) of the planar motor system (3) form a first coupling capacitor (C1) and another one (82) of the first plate electrodes (8) provided on the at least one stator segment (2, 21) of the planar motor system (1) and another one (92) of the second plate electrodes (9) provided on the at least one shuttle (3) and/or on the other stator segment (22) of the planar motor system (1) form a second coupling capacitor (C2). Furthermore, the control arrangement (7) is configured to energize either the at least two first plate electrodes (8) or the at least two second plate electrodes (9) so as to transfer energy and/or data between the at least one stator segment (2, 21) and the at least one shuttle (3) and/or the other stator segment (22) of the planar motor system (1).

## Description

### TECHNICAL FIELD OF THE INVENTION

The present invention relates to a planar motor system, which comprises at least one stator segment and at least one shuttle with a magnet unit, wherein drive coils are arranged on the at least one stator segment and a magnet unit is arranged on the at least one shuttle. A control arrangement controls the drive coils of the at least one stator segment to interact with the magnet unit of the at least one shuttle electromagnetically to move the at least one shuttle.

### BACKGROUND INFORMATION

Planar motor systems, which are well known from state of the art, are often used as transport systems in production processes, for example, or in other applications requiring complex movement profiles. The basic structure of a planar motor system and their mode of operation are disclosed in WO 2013/059934 A1 or WO 2019/129576 A1, for example. Applications of planar motor systems are shown in EP 3 172 156 B1 or in EP 3 172 134 B1, for example.

A planar motor system usually comprises a stator, which is often of modular design and usually forms a fixed part of the planar motor system. Usually, the stator comprises at least one, usually several stator segments, which may be connected in virtually any pattern - from squares, rectangles to complex paths to traverse around other equipment or to link different working stations of a production process. Furthermore, the stator may comprise fixed stator segments and at least one stator segment, which is movable and can be added to the fixed stator segments to flexibly change the shape of stator e.g., during production processes.

Usually, one or more movable parts, so-called movers or shuttles, are moved - at least two-dimensionally - on a movement plane, formed by the stator of the planar motor system. For this purpose, magnetic elements like drive coils are usually arranged on the stator or stator segments. To move the shuttles on the stator or the movement plane, a driving force acting on each shuttle has to be generated by interacting magnet fields. To cause the shuttle to move in a desired direction, at least one of the magnetic fields, usually that of the stator, has to be variable in time. Therefore, drive coils are arranged on the stator or the stator segment. A control arrangement controls the drive coils or different drive coil groups arranged on the stator or stator segment to generate the time-variable and moving magnetic field by energizing the respective drive coils.

Each shuttle usually comprises a magnet unit with drive magnets, normally permanent magnets, being arranged at least two-dimensionally on the shuttle. It is also possible that electromagnets are used as drive magnets on the shuttle. These drive magnets interact electromagnetically with the moving magnet field of the stator. Usually, the moving magnet field is generated by energizing the drive coils of the stator or stator segment. Alternatively, the stator may comprise moveable permanent magnets for generating the moving magnetic field. The interaction of the magnet field of the drive magnets and the moving magnet field generated of the stator generates the driving force as well as a levitation force which are exerted on the shuttle. The levitation force is used to at least slightly lift the shuttle off the stator surface and to hold the shuttle in a constant position, e.g., an air gap can be created or set and maintained between the shuttle and the stator surface. The driving force can be used to move the shuttle in a desired direction of movement on the movement plane formed by the stator or stator segment. Additionally, the driving force can be used to generate tilting forces or moments.

The shuttle ideally does not need electric energy for producing the magnetic field and the electromagnetic interaction, when permanent magnets are used as drive magnets in the magnet unit of the shuttle. So, the design of the shuttle may be kept simple and very complex and flexible movements of the shuttle on the stator are possible.

However, there are applications which require electric power transfer to the shuttle. For example, the shuttle may require an electric power supply, when it comprises actuator devices, like e.g., grippers, holding clamps, hydraulic or pneumatic pumps, motors to operate an actuator, etc. Furthermore, these applications may also require data transmission from the control arrangement of the planar motor system, for example, to control the actuator device arranged on the shuttle during production and/or transportation processes. Additionally, there may be applications which also require data transmission from the shuttles to the stator and subsequently to the control arrangement of the planar motor system, for example, when measurement devices are arranged on a shuttle or simply to identify a certain shuttle moving on the stator or to send process parameters to the control arrangement of the planar motor system during a production process. In these applications, contactless power transfer and wireless data transmission are preferred.

Furthermore, there may be applications using a planar motor system, which require rebuilding the stator during the production process. In this case, the planar motor system may comprise a modular stator comprising fixed and movable stator segments which can be easily added and/or moved to change the shape of the stator and thus the movement plane for the shuttles. To quickly adapt the stator to new requirements, it may be advantageous when energy and/or data can be transferred wirelessly between the fixed and movable stator segments.

In particular, contactless power transfer can be inductive or capacitive. Inductive or capacitive power transfer is used, for example, for charging applications, like charging a mobile device or an electrified car. An example for capacitive charging is given in Regensburger B., et al., "High-Performance Capacitive Wireless Power Transfer System for Electric Vehicle Charging with Enhanced Coupling Plate Design", Proceedings Energy Conversion Congress and Exposition (ECCE), 2018 IEEE, p.2472-2477*.*

It is also known that an inductive or conductive power transfer arrangement can simultaneously be used for data transmission. Bidirectional data transmission using an inductive or conductive power transfer arrangement is highly advantageous in applications using a planar motor system, to send control commands to the actuator devices arranged on shuttles and/or to send measuring data or process parameter or identification data of respective shuttles to the control arrangement of the planar motor system. Therefore, bidirectional data transfer using an inductive or conductive power transfer arrangement is highly advantageous in applications using planar motor systems. An example for simultaneous power and data delivery is given in Shaoge Zang, et al., "Capacitive Power Transfer System With Integrated Wide Bandwidth Communication", IEEE Transactions on Power Electronics, Vol. 37, Issue 8, August 2022, p.8805 - 8810*.*

DE 10 2020 212 641 A1 discloses a conveying device with a stator and at least one transport unit, for example, wherein the transport unit is moved relative to the stator in a controlled manner using magnetic forces. Therefore, the transport unit comprises stationary permanent magnets interacting with a magnet field generated by magnet array, which is arranged on the stator and can be moved by actuating elements or electromotors. To set the magnet array correctly, it is necessary to know the position of the transport unit relative to the stator. Therefore, the transport unit of the conveying device comprises a position determination unit comprising sensors (e.g., camera modules, inertial sensor) to provide measurement data, and a control unit, which determines position data from the measurement data. The control unit is also configured to transmit the determined position data to the stator using wireless data transmission, e.g., inductive data transmission, radio transmission or optical data transmission. For this purpose, an additional transmission device has to be provided on the transport unit and the stator of the conveying device, especially for radio transmission or optical transmission of the position data.

Furthermore, the transport unit also comprises an energy storage unit (e.g., an accumulator, a capacitor, etc.) to supply the components of the position determination unit and/or the control unit with energy. The transport unit, therefore, may comprise a charging interface for charging the energy storage unit in a charging station, either by contact (e.g. with galvanic contacts) or contactless (e.g., solar cells, inductive coupling). Alternatively, a discharged energy storage unit can be regularly replaced by a charged energy storage unit. In both embodiments, the transport unit must be moved or put into a charging station or garage station, whenever it is low on battery - to be charged or to have the energy storage unit replaced, which is time consuming and may interrupt the transportation or production process.

### SUMMARY

Against this background, it is the objective of the present disclosure to provide a planar motor system which provides improved energy and/or data transfer between its fixed and movable parts in a simple and cost-efficient way.

These and other objectives are achieved by a planar motor system according to the independent claims. Advantageous embodiments of the present invention are described by the dependent claims.

According to the invention, these and other objectives are achieved by a planar motor system comprising a capacitive power transfer arrangement, which comprises at least two first plate electrodes provided on the at least one stator segment of the planar motor system and at least two second plate electrodes provided on the at least one shuttle of the planar motor system. The control arrangement of the planar motor system is configured to move the at least one shuttle of the planar motor system such that one of the first plate electrodes provided on the at least one stator segment of the planar motor system and one of the second plate electrodes provided on the at least one shuttle of the planar motor system form a first coupling capacitor and another one of the first plate electrodes provided on the at least one stator segment of the planar motor system and another one of the second plate electrodes provided on the at least one shuttle of the planar motor system form a second coupling capacitor. Furthermore, the control arrangement is configured to energize either the at least two first plate electrodes or the at least two second plate electrodes so as to transfer energy and/or data between the at least one stator segment and the at least one shuttle of the planar motor.

The main aspect of the present invention is that energy and/or data are transferred between the at least one stator segment forming a fixed part of the planar motor system and the at least one shuttle forming a movable part of the planar motor system wirelessly and in a simple and easy way. The capacitive power transfer arrangement, which comprises first plate electrodes provided on the stator segment and second plate electrodes provided on the shuttle forming coupling capacitors, has a simple design using plate electrodes on the stator segment and the shuttle. Furthermore, the planar motor system can be easily enhanced to provide the transfer of energy and/or the transmission of data between the stator segment and the shuttle in a cost-effective way. The transferred energy may be used to supply actuator devices (e.g., grippers, motors, holding clamps, hydraulic or pneumatic pumps, etc.) and/or sensor units (e.g., scale, position sensors, temperature sensors, etc. arranged on the shuttle with energy. For example, an energy storage device (e.g., accumulator, rechargeable battery, supercapacitor, etc.) provided on the shuttle may be loaded using the transferred energy, which then may be used to supply the power for the operation of one or more actuator devices arranged on the shuttle. Additionally, the capacitive power transfer arrangement may be used for data transmission between the at least one stator segment and the at least one shuttle, whereby data, like e.g., control data, in particular for controlling an actuator device arranged on the shuttle, may be transferred to the shuttle from the stator segment or a part of the control arrangement (e.g., control unit) assigned to the stator segment. Furthermore, the capacitive power transfer arrangement may also be used to transfer data (e.g., measurement data of sensor units arranged on the shuttle or identification data of the shuttle) to the stator segment, or the part of the control arrangement assigned to the stator segment for further processing. The energy and data can be transferred via the same two first and two second plate electrodes. It is also possible to use different two first and two second plate electrodes to form the coupling capacitors for the energy transfer and the data transmission, especially if several first and second plate electrodes are provided by capacitive power transfer arrangement.

In a preferred embodiment, the capacitive power transfer arrangement of the planar motor system comprises a compensation network. The compensation network provides the possibility to combine the capacitive power transfer with an inductive power transfer. By that way, the energy transfer density between the stator segment and the shuttle can be further increased and the capacitive transfer of energy and/or data may also be more robust to misalignment of the plate electrodes. Furthermore, the usage of a compensation network has the advantage that one of the transfer methods (e.g. inductive or capacitive transfer) may be used for data transmission, while the other transfer method (e.g. inductive or capacitive transfer) may be used for energy transfer, for example. The compensation network may at least comprise a compensation coil, which is arranged on the at least one stator segment, and/or a compensation coil, which is arranged on the at least one shuttle of the planar motor system. The at least one compensation coil arranged on the stator segment and/or the shuttle, forms an oscillating circuit together with the coupling capacitor, for example, which enhances the transmission efficiency. Usually, the compensation network may comprise several coils and capacitors.

It is also advantageous, when the capacitive power transfer arrangement is configured to provide unidirectional or bidirectional energy and/or data transfer between at least one stator segment and the at least one shuttle of the planar motor system. In particular, if data is transferred between the stator segment and the shuttle via the capacitive power transfer arrangement, a bidirectional transmission is advantageous, for e.g. transmission of control data from the stator segment to the shuttle and for transmission of measurement and/or identification data from the shuttle to the stator segment. It is advantageous to use frequency modulation (e.g., frequency shift keying) or amplitude modulation (e.g., amplitude shift keying) or phase shift keying or any combination thereof for the data transmission between at least one stator segment and the at least one shuttle of the planar motor system.

In an advantageous embodiment of the planar motor system, the at least two first electrodes are formed by at least two drive coils or drive coil groups arranged on the at least one stator segment. These two drive coils or drive coil groups have to be controlled independently of each other by the control arrangement. So, no additional first plate electrodes have to be arranged on the at least one stator segment for the capacitive power transfer arrangement.

In an alternative embodiment of the planar motor system, the additional capacitor plates are arranged and provided on the at least one stator segment. These additional capacitor plates form the at least two first plate electrodes of the capacitive power transfer arrangement. The additional capacitor plates can be arranged either on one side of the at least one stator segment, next to the drive coils or drive coils groups arranged on that stator segment (e.g. either horizontally or vertically aligned in relation to the orientation of the surface of the stator segment) or the additional capacitor plates can be mounted above or below the drive coils or drive coils groups. Then the additional capacitor plates are ideally aligned in parallel to the arrangement of the drive coils or horizontally aligned in relation to the orientation of the surface of the stator segment. The additional capacitor plates may also be arranged between the layers of the drive coils of the stator segment. Furthermore, it is also possible to arrange the additional capacitor plates above or below at least one position sensor provided on the stator segment. The different arrangements of the at least two first plate electrodes may also be combined to provide high flexibility in forming the coupling capacitors with the at least two second plate electrodes provided on the shuttles of the planar motor system.

It is also advantageous if the additional capacitor plates are configured as separate capacitor plates. This provides the possibility to have any number of first plate electrodes on the stator segment, also arranged in different orientations. Alternatively, it is possible to integrate the additional capacitor plates into a printed circuit board of the drive coils or drive coil groups. It is also conceivable that the additional capacitor plates, which form the at least first two plate electrodes, are integrated into the printed circuit board of the at least one sensor unit (e.g. position sensor) on the stator segment.

In another preferred embodiment of the planar motor system, at least one additional device is provided, into which the at least two first plate electrodes are integrated. That at least one additional device is either mounted adjacent to one side of the at least one stator segment or onto the surface of the least one stator segment. If the at least one additional device is mounted on top of the stator segment, it may be integrated into the cover plate of the stator segment, for example.

Furthermore, it is advantageous if the at least two second plate electrodes, which are provided on the at least one shuttle, are arranged above the magnet unit or below the magnet unit of the at least one shuttle. The at least two second plate electrodes, which are formed by e.g. a printed circuit board having two surfaces of an electrically conductive material (e.g. copper), may be aligned in parallel to the orientation of the magnet unit of the shuttle. Alternatively, it is also possible to have the at least two second plate electrodes arranged next to the magnet unit. Then the at least two second electrode plates may be arranged either in parallel or perpendicular to the orientation of the magnet unit on the shuttle, for example.

Furthermore, the objectives given above are also achieved by a planar motor system, which comprises at least a second stator segment, being configured to be added to the at least first stator segment of the planar motor system. The planar motor system comprises a capacitive power transfer arrangement comprising at least two first plate electrodes, which are arranged on the first stator segment of the planar motor system, and at least two second plate electrodes, which are arranged on the second stator segment. The control arrangement of the planar motor system is configured to move the second stator segment of the planar motor system such that one of the first plate electrodes arranged on the first stator segment of the planar motor system and one of the second plate electrodes arranged on the second stator segment of the planar motor system form a first coupling capacitor and another one of the first plate electrodes arranged on the first stator segment of the planar motor system and another one of the second plate electrodes arranged on the second stator segment of the planar motor system form a second coupling capacitor. Furthermore, the control arrangement is configured to energize either the at least two first plate electrodes or the at least two second plate electrodes so as to transfer energy and/or data between the first stator segment and the second stator segment of the planar motor.

In this embodiment of the present invention, energy and/or data is ideally transferred between at least two stator segments of the planar motor system, wherein the at least one second stator segment is movable and can be moved. Thus, the first stator segment forms a fixed part and the at least one second stator segment forms a movable part of planar motor system. Energy and/or data can be wirelessly and easily transferred between the first and the second stator segment via the capacitive power transfer arrangement, which comprises first plate electrodes provided on the first stator segment and second plate electrodes provided on the second stator segment forming coupling capacitors. The capacitive power transfer arrangement is configured to provide unidirectional energy and/or data transfer between the first and the second stator segment. Alternatively, it may be advantageous, in particular with data transmission, if the capacitive data transfer arrangement is configured to provide bidirectional energy and/or data transfer between the first and the second stator segment.

In a preferred embodiment of the planar motor system, the at least two first plate electrodes are integrated into the housing of the first stator segment of the planar motor system and at least two second plate electrodes are integrated into the housing of the second stator segment of the planar motor system. The at least two second plate electrodes are conveniently arranged on or integrated into a side of the housing of the second stator segment of the planar motor system. This side of the housing faces a side of the housing of the first stator segment of the planar motor system, when the second stator segment is added to the first stator segment, wherein the least two first plate electrodes are arranged on or integrated into that side of the housing of the first stator segment. Ideally, the at least two first plate electrodes provided on the first stator segment and the at least two second plate electrodes provided on the second stator segment are arranged on top of each other or next to each other on the respective stator segment of the planar motor system, to easily form the coupling capacitors for the transfer of energy and/or data, when the second stator segment is added to the first stator segment.

### BRIEF DESCRIPTION OF THE DRAWINGS

In the following, the present invention will be described in greater detail with reference to Figs. 1 to 9, which show exemplary, schematic and non-limiting advantageous embodiments of the invention. In the drawings:
Fig. 1 is a schematic and exemplary embodiment of a planar motor system with an inventive capacitive power transfer arrangement in a cross-section view;
Fig. 2 is a concept of capacitive power and/or data transfer;
Fig. 3 is another concept of capacitive power and/or data transfer;
Figs. 4a and 4b are further exemplary embodiments of the planar motor system with the inventive capacitive power transfer arrangement using different arrangements of first and second plate electrodes on a stator segment and a shuttle in a cross-section view;
Figs. 5a to 5e are further different arrangements of the first plate electrodes of the inventive capacitive power transfer arrangement on the stator segment in a cross-section view;
Figs. 6a and 6b are further different arrangements of the second plate electrodes of the inventive capacitive power transfer arrangement on the shuttle in a cross-section view;
Figs. 7a and 7b are exemplary embodiments of the planar motor system with the inventive capacitive power transfer arrangement using an additional device;
Fig. 8 is the planar motor system with the inventive capacitive power transfer arrangement having the first plate electrodes mounted on the stator surface in a top view;
Fig. 9 is another exemplary embodiment of the planar motor system with the inventive capacitive power and/or data transfer between two stator segments.

### DETAILED DESCRIPTION

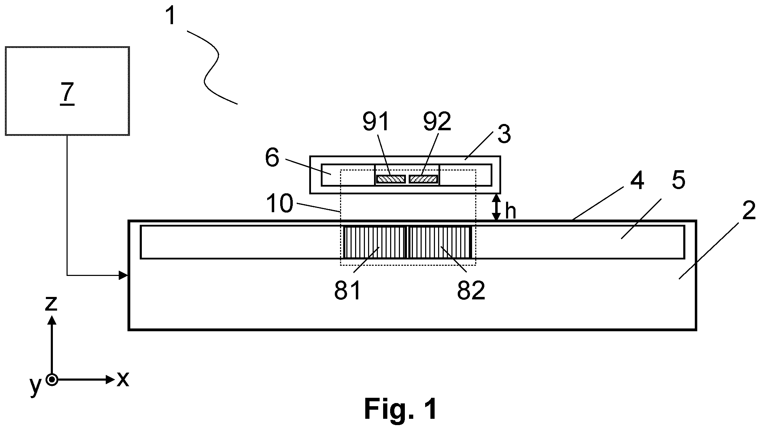

Fig. 1 schematically shows an exemplary embodiment of a planar motor system 1. The planar motor system 1 comprises at least one stator segment 2, which forms the stator of the planar motor system 1. Usually, the stator comprises a modular structure being built of two or more stator segments 2 which can be connected in virtually any pattern necessary for the respective application of the planar motor system 1. A coordinate system x, y, z may be defined for the planar motor system 1, which may be connected to the stator 2 which may be a fixed part in relation to at least one shuttle 3, which represents a moving part of the planar motor system 1. A main plane x, y of the coordinate system x, y, z may be in parallel with a surface of the stator 2 or stator segment 2, for example.

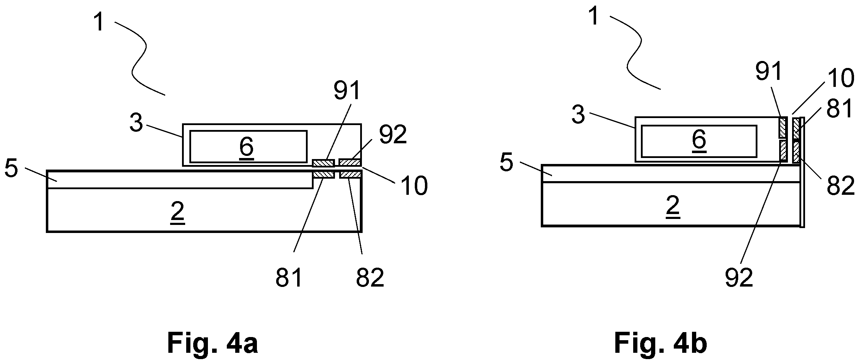

Furthermore, the planar motor system 1 comprises at least one shuttle 3, which can be moved above the surface 4 of the stator 2 or stator segment 2 at operation height h during operation of the planar motor system 1 - as exemplary shown in Fig. 1. The required forces for the movement of the shuttle 2 are generated by means of (electro)magnetism. For this purpose, drive coils 5 are arranged in groups on the stator segment 2, wherein the drive coils 5 are not shown in detail and individually in Fig. 1 (as well as in Figs. 4a to 5e) for reasons of clarity. Usually, so-called PCB coils (PCB = printed circuit board) arranged on a printed circuit board are used as drive coils 5, but it is also possible to use wound-wire coils as drive coils 5.

The at least one shuttle 3 comprises a magnet unit 6, which comprises several drive magnets, usually permanent magnets, but it is also possible to use electromagnets, for example. If permanent magnets are used, the magnet unit often uses a special arrangement of the drive magnets, like e.g., a given number of so-called Halbach arrays, that augments the magnet field on one side of the array, while cancelling the field to near zero on the other side. The control of the movement of the at least one shuttle 3 in the movement plane, which is formed or defined by the stator 2 or stator segment 2, is associated with the control of energizing the drive coils 5, which are sufficiently known from WO 2021/105165 A1 and WO 2021/175885 A1, for example. In principle, the drive coils 5 around the shuttle 3 are energized to generate a moving magnetic field. The planar motor system 1 comprises a control arrangement 7 to control the energizing of the drive coils 5 with a drive voltage. The control arrangement 7 may comprise at least one, usually several control units (hardware and/or software) to control the energizing of individual drive coils 5 or individual groups of drive coils 5. In this case, the control arrangement 7 may also comprise at least one higher level control unit and/or by a central control unit to supervise and control the several control units, which control the individual drive coils 5 or drive coils groups, depending on the respective control arrangement 7. The moving magnetic field generated by energizing the drive coils 5 of the stator 2 or stator segment 2 interacts electromagnetically with the magnet unit 6 of the shuttle 3. A drive force and a levitation force are exerted on the shuttle 3, wherein the levitation force may lift off the shuttle 3 from the stator surface 4 to the operation height h (e.g., a few millimeters) and the drive force can be used to move the shuttle 3. Thus, the shuttle 3 can magnetically float at operation height h above the stator surface 4 in desired direction of movement.

In general, high-precision movements of the shuttles 3 can be carried out in the direction of all six rigid body degrees of freedom with the aid of a planar motor system 1. Usually, the drive coils 5 can be arranged relative to one another in such a way that two main directions of movement are defined, e.g. in the direction of the x- and y-axis. Due to the modular structure of the stator 2, translational movements in two main directions of movement are virtually unrestricted. The two main directions of movement (e.g., x- and y-direction of the coordinate system) are arranged substantially parallel to the surface 4 of the stator 2 or stator segment. Additionally, depending on the structural design of the stator 2 and the shuttles 3, movements in the four remaining secondary directions of movement are also possible as a rule, some only to a limited extent due to physical limits and/or construction. The four secondary directions of movement comprise a translation in the direction of the z-axis (raise and lower) and all three rotations about the x-, y-, and z-axis of the coordinate system x, y, z.

In a lot of applications, the shuttle 3 carries an object, like a product to be transferred, a container, etc., for example. In some applications the shuttle 3 may comprise or carry an actuator device, like e.g. grippers, holding clamps, hydraulic or pneumatic pumps, etc., and/or motors to operate such an actuator device, which is used during a production and/or transport process for carrying out particular tasks and/or handling operation, for example. These actuator devices need power to fulfill their tasks properly during the production and/or transportation process. Therefore, the shuttle 3 may also comprise an energy storage device (e.g., accumulator, rechargeable battery, supercapacitor, etc.), which may supply one or more actuator devices arranged on the shuttle 3 with power. Furthermore, the actuator device arranged on the shuttle 3 may need control data from the control arrangement 7 of the planar motor system 1 for proper operation during a production and/or transportation process. Additionally, it may be necessary to transfer data (e.g., measurement data, identification data, process parameters, etc.) from the shuttle 3 to the control arrangement 7 of the planar motor system 1 during operation.

Therefore, the planar motor system 1 comprises a capacitive power transfer arrangement 10. The capacitive power transfer arrangement 10 comprises at least two first plate electrodes 8, 81, 82, which are provided on the stator 2 or stator segment 2. In the preferred embodiment of the planar motor system 1, exemplary shown in Fig. 1, the two first plate electrodes are formed by at least two of the drive coils 5. This is possible, if the stator segment 2 comprises drive coils which are star-connected in a 3 phase system, for example. Then, the at least two first plate electrodes 8, 81, 82 are formed by two 3-phase systems, which can be controlled independently of each other by the control arrangement 7. These at least two 3-phase systems used as first plate electrodes 8, 81, 82 are individually shown in Fig. 1, for better understanding. However, any at least two drive coils 5 or drive coil groups arranged on the stator segment 2 can be used as first plate electrodes 8, 81, 82, when these drive coils or drive coils groups can be controlled individually and independently of each other by the control arrangement 7. Especially when PCB-coils are used as drive coils 5, the drive coils 5 or drive coil groups may function as first plate electrodes 8, 81, 82, due to their special shape.

Alternatively, it is also possible to arrange additional capacitor plates on the stator 2 or on the stator segment 2. These additional capacitor plates then form the at least two first plate electrodes 8, 81, 82. Embodiments of the capacitive power transfer arrangement 10 using additional capacitor plates as first plate electrodes 8, 81, 82 differently arranged on the stator segment 2 will be shown and discussed later with reference to Figs. 4a to 5e.

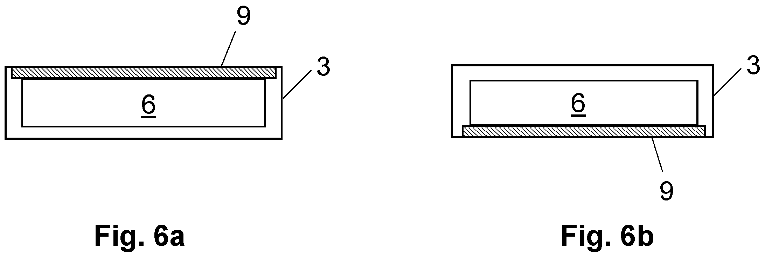

The capacitive power transfer arrangement 10 also comprises at least two second plate electrodes 9, 91, 92, which are provided on the shuttle 3. The shuttle 3 may contain a circuit board with two surfaces made of electrically conductive material (e.g., copper) forming the at least two second plate electrodes 9, 91, 92. In the embodiment shown exemplary in Fig. 1, the at least two second plate electrodes 9, 91, 92 or the circuit board forming the at least two second plate electrodes 9, 91, 92 are arranged in a hole in the center of the magnet unit 6, but other arrangements of the at least two second plate electrodes 9, 91, 92 are possible, which will be shown and discussed later with reference to Figs. 4a and 4b and Figs. 6a and 6b.

Furthermore, the control arrangement 7 is configured to move the shuttle 3 into a position (as shown in Fig. 1). In that position one, e.g., a first plate electrode 81, of the at least two first plate electrodes 8, 81, 82 provided on the stator 2 or stator segment 2 forms a first coupling capacitor C1 with one, e.g., a first plate electrode 91, of the at least two second plate electrodes 9, 91, 92 provided on the shuttle 3 and another one, e.g., a second plate electrode 82, of the at least two first plate electrodes 8, 81, 82 provided on the stator 2 or stator segment 2 forms a second coupling capacitor C2 with another one, e.g., a second plate electrode 92, of the at least two second plate electrodes 9, 91, 92 provided on the shuttle 3. Furthermore, the control arrangement 7 is configured to energize either the at least two first plate electrodes 8, 81, 82 or the at least two second plate electrodes 9, 91, 92 in a way that energy and/or data are transferred between the stator 2 or stator segment 2 and the shuttle 3. Usually, the control arrangement 7 energizes the at least two first plate electrodes 8, 81, 82 for the energy transfer, wherein the energy transfer and/or data transfer is unidirectional, usually from the stator 2 or stator segment 2 to the shuttle 3 with the first plate electrodes 8, 81, 82 functioning as primary side of the coupling capacitors C1, C2 or transmitter and the second plate electrodes 9, 91, 92 functioning as secondary side of the coupling capacitors C1, C2 or receiver. However, it is also possible that the capacitive power transfer arrangement 10 is configured to provide bidirectional energy and/or data transfer between the stator 2 or stator segment 2 and the shuttle. In particular, if data is transferred between the stator 2 or stator segment 2 and the shuttle 3 via the capacitive power transfer arrangement 10, a bidirectional transmission may be advantageous to transfers control data from the stator 2 or stator segment 2 to the shuttle 3 on the one hand and to transfer measurement and/or identification data from the shuttle 3 to the stator 2 or stator segment 2 on the other hand, for example. The data between the stator 2 or stator segment 2 and the shuttle 3 can be transmitted by means of different modulation methods, like e.g., frequency modulation (e.g., frequency shift keying), amplitude modulation (e.g., amplitude shift keying) or phase shift keying or combinations of these modulation methods.

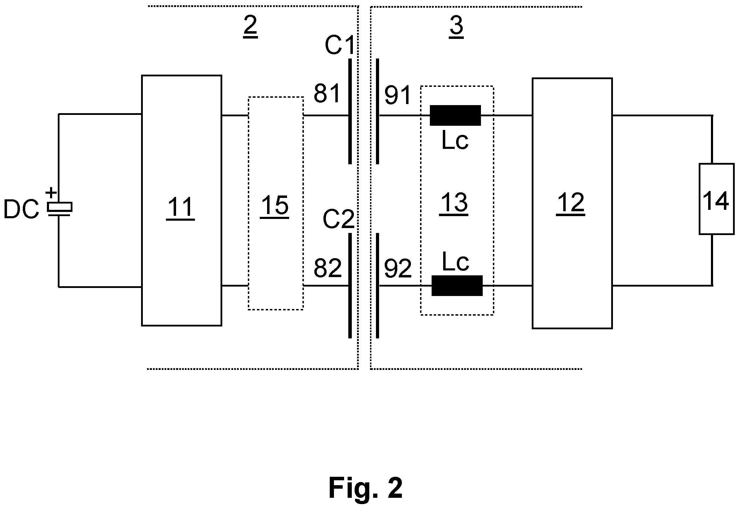

Fig. 2 shows a concept of capacitive power and/or data transfer using a four-plate configuration for capacitive coupling, wherein an embodiment of the capacitive power transfer arrangement 10 uses two coupling capacitors C1, C2 for power and/or data transfer. These two coupling capacitors are formed by the at least two first plate electrodes 81, 82 provided on the stator 2 or the stator segment 2 and the at least two second plate electrodes 91, 92 provided on the shuttle 3. The at least two first plate electrodes 81, 82 form the primary side and the at least two second plate electrodes 91, 92 form the secondary side of the capacitive power transfer arrangement 10, for example.

An AC power source applies an AC primary voltage with 180° phase difference to the first plate electrodes 81, 82. This AC power source may be formed by a DC power source DC and an inverter 11 on the primary side, wherein an existing control circuit of drive coils 5 or drive coils groups 5, used as first plate electrodes 81, 82, may be used to form the inverter 11 (e.g., a full-bridge inverter) on the primary side. The existing control circuit used to form the inverter may be a part of the control arrangement 7, e.g. like control units which control the energizing of the drive coils 5 or drive coils groups 5 used as first plate electrodes 81, 82. The generated electric fields in the coupling capacitors C1, C2 induce opposite phase AC secondary voltages in the at least two second plate electrodes 91, 92 on the secondary side. This in turn causes a secondary AC current to flow back and forth between the two second plate electrodes 91, 92 and through the load 14 connected thereto. Between load 14 and the two second plate electrodes 91, 92 a passive or active rectifier 12 could be provided that would provide a DC secondary voltage and a DC secondary current to the load 14. The rectifier 12 may be contained on the circuit board, which is used to form the at least two second plate electrodes 91, 92 provided on the shuttle 3.

The amount of power transferred with the capacitive power transfer arrangement 10 increases with the frequency of the AC primary voltage and the capacitance of the coupling capacitors C1, C2, which is inversely proportional to the distance between the first plate electrodes 81, 82 and the second plate electrodes 91, 92 in the direction of the z-axis (as shown in Fig. 1). The capacitive power and/or data transfer could be improved if resonant power transfer were used. I.e., that the capacitive power transfer arrangement 10 is operated as resonance inverter, wherein the correct resonance frequency can be determined, for example, using current measurement already available in the stator 2 or stator segment 2. If the capacitive power transfer arrangement 10 is operated as resonance inverter, the coupling capacitors C1, C2 could be integrated into an electric resonant circuit in that a compensation network 13, comprising at least a compensation coil Lc or a choke (inductance) is connected in series or parallel to the second plate electrodes 91, 92 on the secondary side.

Alternatively or additionally, the first plate electrodes 81, 82 could be connected in series or parallel to a compensation network 15 on the primary side, which comprises at least a compensation coil or a choke (inductance). The compensation network 13 on the secondary side and/or the compensation network 15 on the primary side can also comprise additional passive electric components, like capacitors, inductances or resistors. By tuning the choke or the compensation coil Lc (value of the inductance) to the coupling capacitors C1, C2, the resonant circuit can be operated in or close to resonance. The compensation network 13 of the secondary side, in particular the compensation coil Lc or choke (inductance), and any optional additional electrical component, can be arranged on a circuit board which is used to provide the at least two second plate electrodes 91, 92 on the shuttle 3.

The resonant circuit can be excited to operate in resonance by adjusting the frequency of the AC primary voltage applied to the at least two first plate electrodes 81, 82 on the stator 2 or stator segment 2. If drive coils 5 or groups of drive coils 5 are used to form the at least two first plate electrodes 81, 82 of the coupling capacitors C1, C2, for example, an existing control circuit for the drive coils 5 or groups of drive coils 5 within the control arrangement 7 could be used to form the inverter 11. For the energy and/or data transfer, the drive coils 5 forming the at least two first plate electrodes 81, 82 may be controlled with a higher switching frequency - ideally the resonance frequency of the capacitive power transfer arrangement 10 - than the usual switching frequency, which is used to control the energization of the drive coils 5 during normal operation of the planar motor system 1. If the control circuit of the drive coils 5 or groups of drive coils 5 forming the at least two first plate electrodes 81, 82 comprises a low-pass filter, which filters out switching frequency ripple during normal operation of the planar motor system 1, the low pass filter could be extended by an additional band-pass filter, which also allows operation at higher frequencies and thus capacitive power and/or data transfer. Alternatively, an additional switch could be used in the control circuit to switch off the low pass filter, when the control circuit is used for capacitive power and/or data transfer, because the assigned drive coil 5 or group of drive coils 5 is used as one of the at least two first plate electrodes 81, 82.

When the drive coils 5 are arranged relative to each other in such a way that two main directions of movement are defined (e.g., in the direction of the x- and y-axis), then it is possible to use the drive coils 5 defining the first main direction (e.g., the x-direction) for energy and/or data transfer between the stator or stator segment 2 and the shuttle 3, while the drive coils defining the second main direction (e.g., the y-direction) are used to move the shuttle 3 in the second main direction, for example. Alternatively, in particular, if the drive coils 5 of the respective stator segment 2 are star-connected in a 3-phase system and the at least two first plate electrodes 81, 82 are formed by two of star-connected drive coils 5 of the 3-phase system, which can be independently controlled, a high-frequency shift of the star point is conceivable in the control arrangement 7. This may allow a transfer of energy and/or data simultaneously to the operation of the shuttle 3.

Furthermore, it is possible to transfer energy and/or data, while the shuttle 3 is not hovering and/or moving, to increase the capacitance and thus transferable energy between the shuttle 3 and the stator segment 2 via capacitive power transfer. The shuttle 3 may rest on the stator 2 or stator segment 2 in a position, where the at least two second plate electrodes 91, 92 on the shuttle 3 form coupling capacitors C1, C2 with the at least two first plate electrodes 81, 82 of the stator 2 or stator segment 2. In that way, an energy storage unit (e.g., an accumulator, a capacitor, a battery, a supercapacitor, etc.) arranged on the shuttle 3 can be charged, for example.

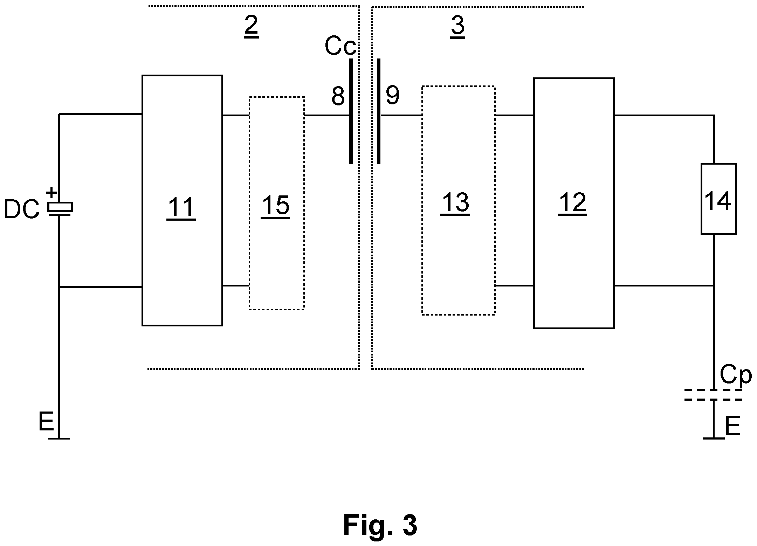

Fig. 3 shows another concept of capacitive power and/or data transfer using a two-plate configuration for capacitive coupling, wherein an embodiment of the capacitive power transfer arrangement 10 uses two plate electrodes 8, 9, wherein a first plate electrode 8 is arranged on the stator 2 or stator segment (primary side) and a second plate electrode 9 is arranged on the shuttle 3 (secondary side), forming a coupling capacitor Cc. The additional parasitic capacitance Cp to earth E (e.g. by earthing of the stator housing) forms the return path for the power and/or data transfer. On the one hand, it may be an advantage of the two plate configuration, when used for the embodiment of the capacitive power transfer arrangement 10, that a better misalignment behavior is better. I.e. that the first and the second plate electrode 8, 9, arranged on the stator 2 or stator segment 2 and the shuttle 3 can be arranged more easily by moving the shuttle 3 in such a way that the coupling capacitance Cc is formed, and capacitive power and/or data transfer may be guaranteed in every movement direction of the shuttle 3. On the other hand, the parasitic capacitance Cp against earth E is not clearly defined and often very small. I.e., that the achievable transferable energy for capacitive power and/or data transfer would be lower than in an embodiment of the capacitive power transfer arrangement 10 using the four-plate configuration as shown in Fig. 2.

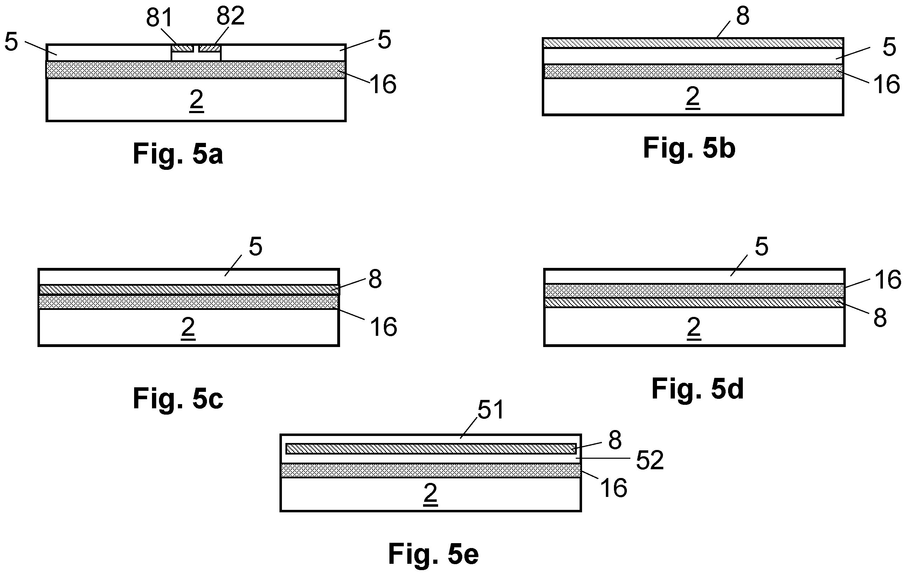

The Figs. 4a and 4b show further exemplary embodiments of the planar motor system 1 comprising the capacitive power transfer arrangement 10 for energy and/or data transfer between the stator 2 or stator segment 2 and the shuttle 3 in a cross-section view. The capacitive power transfer arrangement 10 (as shown in Figs. 4a and 4b) comprises additional capacitor plates, functioning as the at least two first plate electrodes 8, 81, 82. The additional capacitor plates are arranged on or within the stator 2 or the stator segment 2 - either horizontally or vertically. Further different and possible arrangements of the first plate electrodes 8, 81, 82 in the stator 2 or stator segment 2 are shown in Figs. 5a to 5e.

Additionally, Figs. 4a and 4b show different arrangements of the at least two second plate electrodes 9, 91, 92 provided on the shuttle 3 in combination with the arrangement of the at least two first plate electrodes 8, 81, 82 provided on the stator 2 or stator segment 2. The two second plate electrodes 9, 91, 92 may be integrated into the shuttle 3 either horizontally or vertically and formed by a circuit board with two surfaces made of electrically conductive material (e.g., copper), for example. Further different and possible arrangements of the second plate electrodes 9, 91, 92 in the shuttle 3 are shown in Figs. 6a and 6b.

In Fig. 4a the additional capacitor plates forming the first plate electrodes 81, 82 are arranged within of the stator segment 2, wherein the first plate electrodes 81, 82 are horizontally oriented and arranged next to the drive coils 5. The first electrodes 81, 82 are configured as separate capacitor plates, for example, but it is also possible that the first electrodes 81, 82 are integrated into the drive coils 5, if PCB coils are used - as exemplary shown in Fig. 5a. The shuttle 3 - as shown in Fig. 4a - also comprises second plate electrodes 91, 92, which are arranged next to the magnet unit 6 and oriented horizontally or in parallel to the magnet unit 6. The first plate electrodes 81, 82 and the second plate electrodes 91, 92 can form the coupling capacitors C1, C2 of the capacitive power transfer arrangement 10, when the shuttle 3 is moved controlled by the control arrangement 7 into a position, in which the first plate electrodes 81, 82 and the second plate electrodes 91, 92 at least partially overlap.

Fig. 4b shows an embodiment of the capacitive power transfer arrangement 10 of the planar motor system 1, wherein the first plate electrodes 81, 82 are arranged on the side of the stator 2 or stator segment in a vertically oriented way. The second plate electrodes 91, 92 are also arranged in the shuttle - next to the magnet unit 6 and vertically oriented or oriented perpendicular to the magnet unit 6, for example. Again, the shuttle 3 is moved by the control arrangement into a position, in which the first plate electrodes 81, 82 and the second plate electrodes 91, 92 can form the coupling capacitors C1, C2 of the capacitive power transfer arrangement 10.

Furthermore, it is possible that the additional capacitor plates, which function as the first plate electrodes 8 are mounted horizontally above the drive coils 5 and a printed circuit board 16 of a sensor unit (e.g., position sensor unit) arranged in the stator 2 or stator segment 2 - as shown in Fig. 5b, wherein the individual first plate electrodes 81, 82 are not shown in the Figs. 5b to 5e for reasons of clarity. The additional capacitor plates forming the first plate electrodes 8 can be either integrated into the printed circuit board of the drive coils 5, if PCB coils are used, or configured as separate additional capacitor plates.

The additional capacitor plates forming the first plate electrodes 8 may alternatively be mounted horizontally below the drive coils 5 and above the printed circuit board 16 of the sensor unit (as shown in Fig. 5c) or below the drive coils 5 and below the printed circuit board 16 of the sensor unit (as shown in Fig. 5d). If the additional capacitor plates or the first plate electrodes 8 are arranged between the drive coils 5 and the printed circuit board 16 of the sensor unit (as shown in Fig. 5c), the additional capacitor plates or the first plate electrodes 8 may either be integrated into the printed circuit board of the drive coils 5, if PCB coils are used, or into the printed circuit board 16 of the sensor unit or configured as separate additional capacitor plates. If the additional capacitor plates or the first plate electrodes 8 are arranged below the printed circuit board 16 of the sensor unit (as shown in Fig. 5d), the additional capacitor plates or the first plate electrodes 8 may either be integrated into the printed circuit board 16 of the sensor unit or configured as separate additional capacitor plates.

Alternatively, it is also possible to arrange the additional capacitor plates forming the first plate electrodes 8 horizontally in between layers 51, 52 of drive coils 5 - as exemplary shown in Fig. 5e. In this embodiment, the additional capacitor plates are integrated into the printed circuit board of the drive coils 5.

Furthermore, the first plate electrodes 8 or the additional capacitor plates used as first plate electrodes 8 may cover the entire stator segment 2 or the entire stator 2 or just part of the stator segment 2 or stator 2. There may be at least two additional capacitor plates functioning as first plate electrodes 8 up to any number of additional capacitor plates, forming pairs of first plate electrodes 8, arranged in different orientations, per stator segment 2 or stator 2 of the planar motor system 1, when a four-plate configuration for capacitive coupling, as exemplary shown in Fig. 2 is used. If a two-plate configuration for capacitive coupling, as exemplary shown in Fig. 3 is used, it is also possible to have only one additional capacitor plate used as first plate electrode 8 on the stator 2 or the respective stator segment 2. Several shuttles 3, comprising second plate electrodes 9, 91, 92, may use the first plate electrodes 8 provided by the stator segment 2 or stator 2 for energy and/or data transfer - either different pairs of first plate electrodes 8 or the same pair of first plate electrodes 8.

In Figs. 4a and 4b arrangements of the second plate electrodes 91, 92 on the shuttle 3 are shown, wherein the second plate electrodes 91, 92 are arranged next to the magnet unit 6 or beside the magnet unit 6. Figs. 6a and 6b show alternative arrangements of the second plate electrodes 9 on the shuttle 3, wherein the second plate electrodes 9 are either arranged above the magnet unit 6 (as shown in Fig. 6a) or below the magnet unit 6 (as shown in Fig. 6b). The individual second plate electrodes 91, 92 are not shown in the Figs. 6a and 6b for reasons of clarity. The second plate electrodes 9, 91, 92 may cover the entire shuttle 3 or just part of it. There may also be any number of second plate electrodes 9, 91, 92 (e.g., starting from at least two second plate electrodes 91, 92) per shuttle 3. The number of second plate electrodes 9, 91, 92 may also be arranged in different orientations on the shuttle 3.

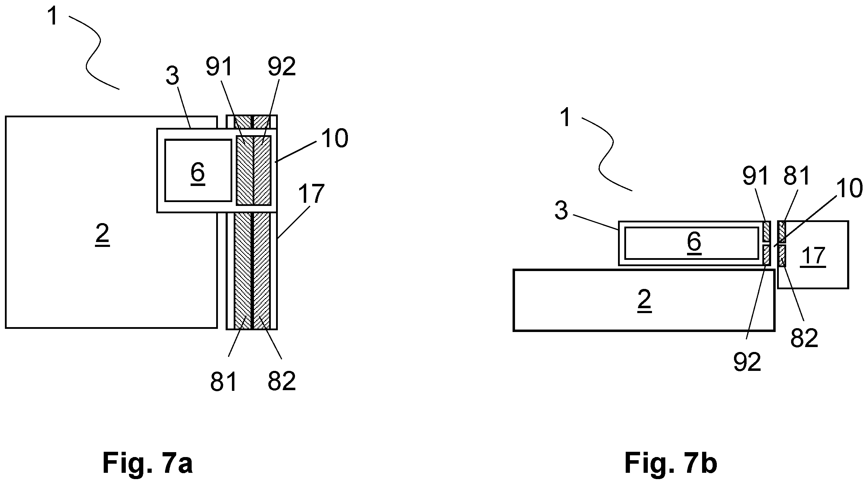

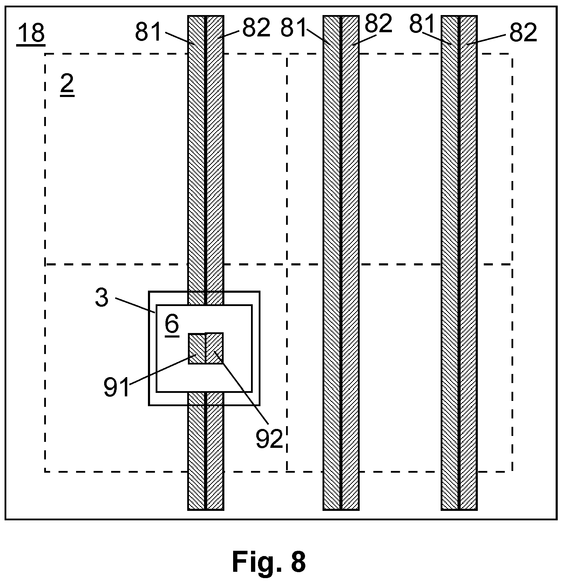

Figs. 7a and 7b and Fig. 8 show further embodiments of the planar motor system 1 comprising a capacitive power transfer arrangement 10, in which the first plate electrodes 81, 82 are integrated into an additional device 17, instead of being integrated into the stator 2 or a stator segment 2 of the planar motor system 1. The additional device 17 can be arranged next or adjacent to one side of the stator 2 of the planar motor system 1 - as shown in Figs. 7a and 7b.

In Fig. 7a, for example, the first plate electrodes 81, 82 are mounted in parallel to the stator surface 4 on the additional device 17, which is arranged adjacent to one side of the stator 2. The shuttle 3, which comprises the second plate electrodes 91, 92 arranged horizontally beside the magnet unit 6, can be moved onto the additional device, in that the first plate electrodes 81, 82 are below the shuttle 3. When the shuttle 3 is moved onto the additional device 17 the first plate electrodes 81, 82 and the second plate electrodes 91, 92 can form the coupling capacitors C1, C2 for energy and/or data transfer. It is also possible that the additional device 17 is arranged beside the stator 2 in a way that the first plate electrodes 81, 82, being integrated into the additional device 17, are above the shuttle 3 and the shuttle 3 has to be moved underneath the additional device 17 for the capacitive power and/or data transfer.

Fig. 7b shows another embodiment, in which the first plate electrodes 81, 82 are integrated into an additional device 17, which is arranged beside or adjacent to the stator 2. In the embodiment shown in Fig. 7b, the first plate electrodes 81, 82 are oriented vertically. The second plate electrodes 91, 92 provided on the shuttle 3 are also oriented vertically next to the magnet unit 6, for example. The shuttle 3 can be moved next to the additional device 17 on the stator 2 in such a way that the first plate electrodes 81, 82 integrated into the additional device 17 and the second plate electrodes 91, 92 on the shuttle 3 form the coupling capacitors C1, C2 of the capacitive power transfer arrangement 10 for energy and/or data transfer.

It is also possible to use several additional devices 17 per stator 2 and one additional device 17 can cover one or more stator segments 2, for example. Furthermore, different capacitor plates can be integrated into one device and function as different pairs of first electrodes 81, 82 (as shown in Fig. 8, for example).

Fig. 8 shows another embodiment of the planar motor system 1 comprising a capacitive power transfer arrangement 10, in which the first plate electrodes 81, 82 are integrated into an additional device, which is mounted onto the surface 4 of the stator 2, like e.g. a cover plate 18. The stator 2 may comprise several stator segments 2, which may be covered by the cover plate 18. The at least two first plate electrodes 81, 82 may be integrated into the cover plate. The shuttle 3, which comprises at least two second plate electrodes 91, 92 - e.g., arranged in the hole in the magnet unit 6, can be moved onto one pair of the first plate electrodes 81, 82 and the first plate electrodes 81, 82 mounted on the stator surface 4 or integrated into the cover plate 18 and the second plate electrodes 91, 92 of the shuttle 3 can form the coupling capacitors C1, C2 of the capacitive power transfer arrangement 10 for energy and/or data transfer.

Alternatively, the cover plate 18 could extend over several stator segments 2 or the entire stator 2 forming one large first plate electrode functioning as primary side capacitor plate with only one second plate electrode on the shuttle 3 forming the secondary side capacitor plate. The primary side capacitor plate or the cover plate 18 and the secondary side capacitor plate provided on the shuttle 3 form a first coupling capacitor C1. This embodiment of the capacitive power transfer arrangement 10 may function as two-plate configuration concept as exemplary shown in Fig. 3 using parasitic capacitance to earth as return path or functioning as second coupling capacitor C2.

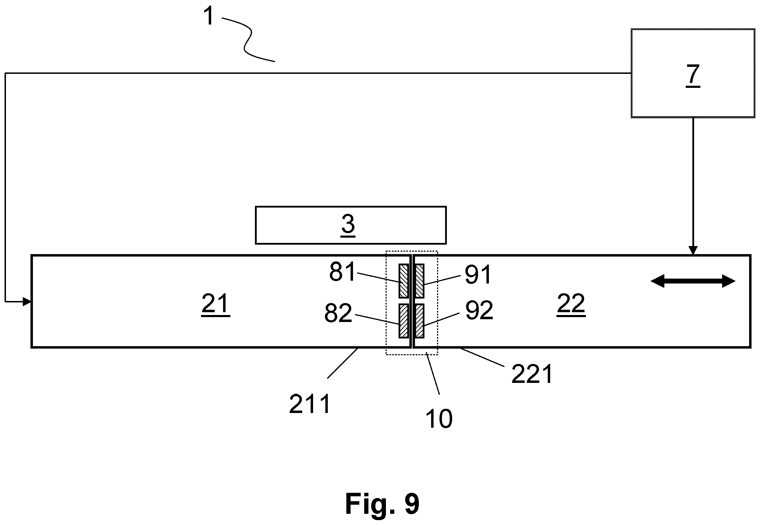

Fig. 9 shows exemplary and schematically another preferred embodiment of the planar motor system 1 being configured for capacitive power and/or data transfer. The planar motor system 1 comprises a first stator segment 21, wherein drive coils 5 are arranged on the first stator segment 21, and at least one shuttle 3 comprising a magnet unit 6 (e.g., permanent magnets) arranged on the shuttle 3. Furthermore, the planar motor system 1 comprises a control arrangement 7, which controls the energizing of the drive coils 5 arranged on the first stator segment 21 to generate a moving magnetic field. The moving magnetic field generated by energizing the drive coils 5 of the first stator segment 21 interacts electromagnetically with the magnet unit 6 of the shuttle 3. A drive force and a levitation force are exerted on the shuttle 3, wherein the levitation force may lift off the shuttle 3 from the surface 4 of the first stator segment 21 to the operation height h (e.g., a few millimeters) and the drive force can be used to move the shuttle 3. Thus, the shuttle 3 can magnetically float at operation height h above the stator surface 4 in desired direction of movement.

The planar motor system 1 comprises at least another one or second stator segment 22, which is also configured to move the shuttle 3 electromagnetically. Furthermore, the at least one second stator segment 22 is configured to be added to the first stator segment 21 of the planar motor system 1, to enlarge a movement plane for shuttle or to rebuild or adapt the stator 2 to current requirements of the production and/or transportation process. Therefore, the second stator segment 22 may be configured to be moveable and also form a moveable part of the planar motor system 1, whereas the first stator segment 21 may be configured to be a fixed part or hardly moveable. When the second stator segment 22 is added to the first stator segment 21, the shuttle 3 may seamlessly move from the first stator segment 21 to the second stator segment 22 or vice versa - as exemplary shown in Fig. 9.

The planar motor system 1 also comprises a capacitive power transfer arrangement 10, which comprises at least two first plate electrodes 81, 82 and at least two second plate electrodes 91, 92. The at least two first plate electrodes 81, 82 are arranged on the first stator segment 21. The at least two first plate electrodes 81, 82 may be integrated into a housing 211 of the first stator segment 21, for example into a side wall of the housing 211 of the first stator segment 21, wherein the at least two first plate electrodes 81, 82 can be arranged on top of each other or next to each other, for example, in the side wall of the first stator segment 21. The at least two second plate electrodes 91, 92 are arranged on the second stator segment 22. The at least two second plate electrodes 91, 92 may be integrated into a housing 221 of the second stator segment 22. For example, the at least two second plate electrodes 91, 92 can be integrated into a side wall of the housing 221 of the second stator segment 22, which faces the side wall of the housing 211 of the first stator segment 21, having the at least two first plate electrodes 81, 82 integrated, when the second stator segment 22 is added to the first stator segment 21. Again the at least two second plate electrodes 91, 92 can be arranged on top of each other or next to each other, for example in the side wall of the first stator segment 21. In Fig. 9, the at least first plate electrodes 81, 82 and the at least second plate electrodes 91, 92 are arranged in the side walls of the housings 211, 221 of the respective stator segments 21, 22 arranged next to each other and oriented vertically or in perpendicular to the surface of the respective stator segments 21, 22, for example.

To add the second stator segment 22 to the first stator segment 21, the control arrangement 7 is configured to move the second stator segment 22 of the planar motor system 1. Therefore, the control arrangement 7 may comprise a separate control unit (hardware and software) or a control function (software) for moving the second stator segment 22 may be integrated into one of the control units of the control arrangement (e.g., into a higher-level control unit or a central control unit), if the control arrangement comprises several control units. The control function (software) for moving the second stator segment 22 may be integrated into the control arrangement, if the control arrangement comprises only one control unit for controlling the planar motor system 1. The control arrangement moves the second stator segment 22 in such a way that one first plate electrode 81 of the first plate electrodes 8 arranged on the first stator segment 21 and one second plate electrode 91 of the second plate electrodes 91, 92 arranged on the second stator segment 22 form a first coupling capacitor C1 and that another first plate electrode 92 of the first plate electrodes 81, 82 arranged on the first stator segment 21 and another second plate electrode 92 of the second plate electrodes 91, 92 arranged on the second stator segment 22 form a second coupling capacitor C2.

As exemplary shown in Fig. 9, a first plate electrode 81 of the at least two first plate electrodes 81, 82 arranged in the side wall of the housing 211 of the first stator segment 21 faces a first plate electrode 91 of the at least two second plate electrodes 91, 92 arranged in the side wall of the housing 221 of the second stator segment 22. The two plate electrodes 81, 91 form the first coupling capacitor C1, for example. A second plate electrode 82 of the at least two first plate electrodes 8 arranged in the side wall of the housing 211 of the first stator segment 21 faces a second plate electrode 92 of the at least two second plate electrodes 91, 92 arranged in the side wall of the housing 221 of the second stator segment 22. These two plate electrodes 82, 92 form the first coupling capacitor C2, for example.

The control arrangement is also configured to energize either the at least two first plate electrodes 81, 82 or the at least two second plate electrodes 91, 92 so as to transfer energy and/or data between the first stator segment 21 and the added second stator segment 22 of planar motor system 1.

Usually, the control arrangement 7 may energize the at least two first plate electrodes 81, 82 of the first stator segment 21, which may be configured as fixed part of the planar motor system 1 to transfer energy and/or data to the second stator segment 22, which may be moveable. So, the energy transfer and/or data transfer between the two stator segments 21, 22 may be unidirectional, wherein the first plate electrodes 81, 82 of the first stator segment function as primary side of the coupling capacitors C1, C2 or transmitter and the second plate electrodes 91, 92 of the second stator segment 22 function as secondary side of the coupling capacitors C1, C2 or receiver.

But the capacitive power transfer arrangement 10 may also be configured for a bidirectional energy and/or data transfer between the two stator segments 21, 22. In particular, the bidirectional capacitive data transfer can be used to exchange data (e.g., control data, parameters, etc.) between the two stator segments 21, 22. The data between the two stator segments 21, 22 can be transmitted by means of different modulation methods, like e.g., frequency modulation (e.g., frequency shift keying), amplitude modulation (e.g., amplitude shift keying) or phase shift keying or combinations of these modulation methods.

The capacitive power and/or data transfer between the two stator segments 21, 22 or the capacitive power transfer arrangement used for that energy and/or data transfer is based on the same concept as the capacitive power and/or data transfer between a stator segment 2, 21, 22 and a shuttle 3 (as shown in Fig. 2) using a four-plate configuration concept. But it may also be possible to use a two-plate configuration concept as exemplary shown in Fig. 3 using parasitic capacitance to earth as return path or functioning as second coupling capacitor C2. Then only one first plate electrode is provided on the first stator segment 21 and only one second plate electrode is provided on the second stator segment 22. These plate electrodes then form the first coupling capacitor C1.

### Reference signs

- 1: Planar motor system
- 2: Stator or Stator segment
- 21: First stator segment
- 211: Housing of the first stator segment
- 22: Second stator segment
- 221: Housing of the second stator segment
- 3: Shuttle
- 4: Stator surface
- 5: Drive coils
- 51, 52: Drive coil layers
- 6: Magnet unit
- 7: Control arrangement
- 8: First plate electrodes
- 81: First plate electrode of the first plate electrodes
- 82: Second plate electrode of first plate electrodes
- 9: Second plate electrodes
- 91: First plate electrode of the second plate electrodes
- 92: Second plate electrode of second plate electrodes
- 10: Capacitive power transfer arrangement
- 11: Inverter
- 12: Rectifier
- 13: Compensation network on secondary side/shuttle side
- 14: Load
- 15: Optional compensation network on primary side/stator segment side
- 16: Printed circuit board of a sensor unit
- 17: Additional device
- 18: Cover plate

- h: Operation height
- x, y, z: Axes of the coordinate system
- C1, C2, Cc: Coupling capacities
- Cp: Parasitic capacitance
- DC: DC power source
- E: Earth, Ground
- Lc: Compensation coil

## Claims

1. Planar motor system (1) comprising at least one stator segment (2) and at least one shuttle (3), wherein drive coils (5) are arranged on the at least one stator segment (2), and wherein a magnet unit (6) is arranged on the at least one shuttle (3), and wherein a control arrangement (7) controls the drive coils (5) to interact with the magnet unit (6) of the at least one shuttle (3) electromagnetically to move the at least one shuttle (3), ***characterized in that*** the planar motor system (1) comprises a capacitive power transfer arrangement (10), wherein the capacitive power transfer arrangement (10) comprises at least two first plate electrodes (8) provided on the at least one stator segment (2) of the planar motor system (1) and at least two second plate electrodes (9) provided on the at least one shuttle (3) of the planar motor system (1), ***in that*** the control arrangement (7) is configured to move the at least one shuttle (3) of the planar motor system (1) such that one (81) of the first plate electrodes (8) provided on the at least one stator segment (2) of the planar motor system (1) and one (91) of the second plate electrodes (9) provided on the at least one shuttle (3) of the planar motor system (3) form a first coupling capacitor (C1) and another one (82) of the first plate electrodes (8) provided on the at least one stator segment (2) of the planar motor system (1) and another one (92) of the second plate electrodes (9) provided on the at least one shuttle (3) of the planar motor system (1) form a second coupling capacitor (C2), ***and in that*** the control arrangement (7) is further configured to energize either the at least two first plate electrodes (8) or the at least two second plate electrodes (9) so as to transfer energy and/or data between the at least one stator segment (2) and the at least one shuttle (3) of the planar motor system (1).

2. Planar motor system (1) according to claim 1, ***characterized in that*** the capacitive power transfer arrangement (10) comprises a compensation network (13, 15), which at least comprises a compensation coil (Lc) arranged on the at least one stator segment (2) and/or a compensation coil (Lc) arranged on the at least one shuttle (3) of the planar motor system (1).

3. Planar motor system (1) according to claim 1 or 2, ***characterized in that*** the capacitive power transfer arrangement (10) is configured to provide unidirectional or bidirectional energy and/or data transfer between at least one stator segment (2) and the at least one shuttle (3) of the planar motor system (1).

4. Planar motor system (1) according to one of the claims 1 to 3, ***characterized in that*** frequency modulation or amplitude modulation or phase shift keying or any combination thereof is used to transmit data between at least one stator segment (2) and the at least one shuttle (3) of the planar motor system (1).

5. Planar motor system (1) according to one of the claims 1 to 4, ***characterized in that*** at least two drive coils (5) or drive coils groups, arranged on the at least one stator segment (2) and being controlled independently of each other by the control arrangement (7), form the at least two first plate electrodes (8, 81, 82).

6. Planar motor system (1) according to one of the claims 1 to 4, ***characterized in that*** additional capacitor plates are provided on the at least one stator segment (2) to form the at least two first plate electrodes (8, 81, 82).

7. Planar motor system (1) according to claim 6, ***characterized in that*** the additional capacitor plates are arranged on one side of the at least one stator segment (2) next to the drive coils (5) ***or in that*** the additional capacitor plates are mounted above the drive coils (5) or below the drive coils (5) or between layers (51, 52) of the drive coils (5).

8. Planar motor system (1) according to claim 6 or 7, ***characterized in that*** the additional capacitor plates are configured as separate capacitor plates ***or in that*** the additional capacitor plates are integrated in a printed circuit board of the drive coils (5) or drive coil groups or a printed circuit board of a sensor unit (16).

9. Planar motor system (1) according to one of the claims 1 to 8, ***characterized in that*** at least one additional device (17) is provided, into which the at least two first plate electrodes (8, 81, 82) are integrated, wherein the at least one additional device (17) is either mounted adjacent to one side of the at least one stator segment (2) or onto the surface (4) of the least one stator segment (2).

10. Planar motor system (1) according to one of the claims 1 to 9, ***characterized in*** the at least two second plate electrodes (9, 91, 92) are arranged next to the magnet unit (6), the two second plate electrodes (9, 91, 92) being arranged either in parallel to the magnet unit (6) or perpendicular to the magnet unit (6).

11. Planar motor system (1) according to one of the claims 1 to 9, ***characterized in*** the at least two second plate electrodes (9) are arranged above the magnet unit (6) or below the magnet unit (6) of the at least one shuttle (3).

12. Planar motor system (1) comprising a first stator segment (21) and at least one shuttle (3), wherein drive coils (5) are arranged on the first stator segment (21) and a magnet unit (6) is arranged on the at least one shuttle (3), and wherein a control arrangement (7) controls the drive coils (5) to interact with the magnet unit (6) of the at least one shuttle (3) electromagnetically to move the at least one shuttle (3), ***characterized in that*** the planar motor system (1) comprises at least a second stator segment (22), which is configured to be added to the first stator segment (21) of the planar motor system (1), ***in that*** the planar motor system (1) comprises a capacitive power transfer arrangement (10), which comprises at least two first plate electrodes (8) are arranged on the first stator segment (21) of the planar motor system (1) and at least two second plate electrodes (9) are arranged on the second stator segment (22) of the planar motor system (1), ***in that*** the control arrangement (7) is configured to move the second stator segment (22) of the planar motor system (1) such that one (81) of the first plate electrodes (8) arranged on the first stator segment (21) of the planar motor system (1) and one (91) of the second plate electrodes (9) arranged on the second stator segment (22) of the planar motor system (1) form a first coupling capacitor (C1) and another one (82) of the first plate electrodes (8) arranged on the first stator segment (21) of the planar motor system (1) and another one (92) of the second plate electrodes (9) arranged on the second stator segment (22) of the planar motor system (1) form a second coupling capacitor (C2) ***and in that*** the control arrangement (7) is further configured to energize either the at least two first plate electrodes (8) or the at least two second plate electrodes (9) so as to transfer energy and/or data between the first stator segment (21) and the second stator segment (22) of the planar motor system (1).

13. Planar motor system (1) according to claim 12, ***characterized in that*** the at least two first plate electrodes (8) are integrated into a housing (211) of the first stator segment (21) of the planar motor system (1) and at least two second plate electrodes (9) are integrated into a housing (221) of the second stator segment (22) of the planar motor system (1).

14. Planar motor system (1) according to claim 12 or 13, ***characterized in that*** the at least two second plate electrodes (9) are integrated into a side of the housing (221) of the second stator segment (22) of the planar motor system (1), which faces a side of the housing (211) of the first stator segment (21) of the planar motor system (1), into which the at least two first plate electrodes (8) are integrated, when the second stator segment (22) is added to the first stator segment (21).

15. Planar motor system (1) according to one of the claims 12 to 14, ***characterized in that*** the at least two first plate electrodes (8) and the at least two second plate electrodes (9) are arranged on top of each other or next to each other on the respective stator segment (21, 22) of the planar motor system (1).
